# EUROPÄISCHE PATENTANMELDUNG

(11) **EP 4 576 501 A1**
(43) Veröffentlichungstag der Anmeldung: **25.06.2025**
(21) Anmeldenummer: 24218680.7
(22) Anmeldetag: 10.12.2024
(51) Int. Cl.: H02K 1/24, H02K 1/32

(54) **ROTORBLECH MIT EINEM LOCH IN EINEM ÜBERHANGABSCHNITT**

(30) Priorität: 21.12.2023 DE 102023136290
(71) Anmelder: Valeo eAutomotive Germany GmbH, 91056 Erlangen (DE)
(72) Erfinder: Siepker, Carsten, 97616 Bad Neustadt an der Saale (DE)
(74) Vertreter: Valeo Powertrain Systems

(57) **Zusammenfassung**

Rotorblech (1) für ein Rotorblechpaket (50), wobei das Rotorblech (1) aufweist:
- einen Jochabschnitt (2) mit einem Zentralloch (3), durch das eine Rotationsachse (4) des Rotorblechs (1) verläuft, und
- mehrere Polabschnitte (5), die jeweils einen Polkernabschnitt (6), der radial vom Jochabschnitt (2) absteht, und einen Polkopfabschnitt (7), der sich radial außen an den Polkernabschnitt (6) anschließt und einen ersten Überhangabschnitt (8) und einen zweiten Überhangabschnitt (9) ausbildet, die beidseitig in Umfangsrichtung über den Polkernabschnitt (6) herausragen, aufweisen,
wobei im ersten Überhangabschnitt (8) ein erstes Loch (10) ausgebildet ist.

## Beschreibung

Die vorliegende Erfindung betrifft ein Rotorblech für ein Rotorblechpaket, wobei das Rotorblech aufweist: einen Jochabschnitt mit einem Zentralloch, durch das eine Rotationsachse des Rotorblechs verläuft, und mehrere Polabschnitte, die jeweils einen Polkernabschnitt, der radial vom Jochabschnitt absteht, und einen Polkopfabschnitt, der sich radial außen an den Polkernabschnitt anschließt und einen ersten Überhangabschnitt und einen zweiten Überhangabschnitt ausbildet, die beidseitig in Umfangsrichtung über den Polkernabschnitt herausragen, aufweisen.

Daneben betrifft die Erfindung ein Rotorblechpaket für einen Rotor, einen Rotor für eine elektrische Maschine, eine elektrische Maschine für ein Fahrzeug und ein Fahrzeug.

Rotoren für fremderregte Synchronmaschinen (EESM) weisen, insbesondere im Bereich automotiver Anwendungen, ein aus einer Vielzahl von gestapelt angeordneten Rotorblechen gebildetes Rotorblechpaket auf. Es wurde bereits vorgeschlagen, diese Rotorbleche mit Löchern zu versehen, die eine axiale Durchgangsöffnung des Rotorblechpakets ausbilden. Diese Löcher können für diverse Zwecke, insbesondere zum Durchleiten eines Kühlmittels zur Kühlung des Rotors oder für mechanische Zwecke, verwendet werden.

So offenbart beispielsweise die EP 4 191 839 A1 ein aus gestapelten Elektroblechen gebildetes Blechpaket für einen Rotor. Pole des Rotors weisen als Kühlkanäle vorgesehene Durchgangsöffnungen auf, die zumindest teilweise innerhalb eines Polkopfes vorgesehen sind.

Der Erfindung liegt die Aufgabe zugrunde, eine Möglichkeit zur Verbesserung der Leistungsfähigkeit einer elektrischen Maschine anzugeben.

Diese Aufgabe wird erfindungsgemäß gelöst durch ein Rotorblech der eingangs genannten Art, bei dem im ersten Überhangabschnitt ein erstes Loch ausgebildet ist.

Das erfindungsgemäße Rotorblech für ein Rotorblechpaket weist einen Jochabschnitt auf. Der Jochabschnitt weist ein Zentralloch auf. Durch das Zentralloch verläuft eine Rotationsachse des Rotorblechs. Das erfindungsgemäße Rotorblech weist ferner mehrere Polabschnitte auf. Die Polabschnitte weisen jeweils einen Polkernabschnitt und einen Polkopfabschnitt auf. Der Polkernabschnitt steht radial vom Jochabschnitt ab. Der Polkopfabschnitt schließt sich radial außen an den Polkernabschnitt an. Der Polkopfabschnitt bildet einen ersten Überhangabschnitt und einen zweiten Überhangabschnitt aus. Die Überhangabschnitte ragen beidseitig in Umfangsrichtung über den Polkernabschnitt heraus. Im ersten Überhangabschnitt ist ein erstes Loch ausgebildet.

Die Erfindung beruht auf der Überlegung, das erste Loch gezielt im ersten Überhangabschnitt auszubilden, sodass durch magnetische Sättigung eine Flussbarriere im ersten Überhangabschnitt ausgebildet werden kann. Dadurch kann zusätzlich zu bekannten Vorteilen eines Lochs im Polkopfabschnitt das erzielbare Reluktanzmoment beim Betrieb einer das Rotorblech aufweisenden elektrischen Maschine erhöht werden. Eine eventuelle Verringerung des durch den Rotorfluss erzeugten Drehmoments wird dabei durch das vergrößerte Reluktanzmoment kompensiert. Vorteilhafterweise ist eine entsprechende elektrische Maschine so leistungsfähiger betreibbar.

Das erfindungsgemäße Rotorblech ist insbesondere aus einem weichmagnetischen Metall ausgebildet. Das Zentralloch kann kreisrund ausgebildet sein. Typischerweise wird das Zentralloch vollständig vom Jochabschnitt umgeben.

Es ist typischerweise eine gerade Anzahl von Polabschnitten vorgesehen. Beispielsweis sind vier, sechs, acht, zehn oder zwölf Polabschnitte, vorgesehen. Die Polabschnitte können in Umfangsrichtung äquidistant um den Jochabschnitt herum angeordnet sein.

Ein jochabschnittferner Rand des Polkopfabschnitts ist typischerweise bogenförmig, insbesondere kreisbogenförmig, ausgebildet. Zwischen einem jeweiligen Überhangabschnitt und dem Jochabschnitt kann ein Aufnahmebereich für eine Wicklung ausgebildet sein.

Das erste Loch befindet sich vorzugsweise vollständig im ersten Überhangabschnitt. Vorzugsweise ist das erste Loch vollständig vom Material des ersten Überhangabschnitts umgeben. Das heißt, dass ein Rand des ersten Lochs vollständig durch den ersten Überhangabschnitt ausgebildet ist.

Bevorzugt ist vorgesehen, dass der Verlauf eines jochabschnittnahen Randabschnitts des ersten Lochs dem Verlauf eines jochabschnittnahen Randes des ersten Überhangabschnitts folgt. Der Verlauf des jochabschnittnahen Randabschnitts ist insbesondere parallel zum Verlauf des jochabschnittnahen Randes des ersten Überhangabschnitts. Das Rotorblech kann die Flussbarriere so als Steg zwischen dem ersten Loch und dem Aufnahmebereich ausbilden.

Gemäß einer Ausgestaltungsvariante kann vorgesehen sein, dass der Verlauf eines jochabschnittfernen Randabschnitts des ersten Lochs dem Verlauf eines jochabschnittfernen Randes des ersten Überhangabschnitts folgt. Der Verlauf des jochabschnittfernen Randabschnitts ist insbesondere konzentrisch zum Verlauf des jochabschnittfernen Randes des ersten Überhangabschnitts. Auf diese Weise kann die Flussbarriere als Steg zwischen dem ersten und dem jochabschnittfernen Rand des ersten Überhangabschnitts bzw. des dem jochabschnittfernen Rand des Polkopfabschnitts ausgebildet sein.

Alternativ zur vorgenannten Ausgestaltungsvariante kann ein jochabschnittferner Randabschnitt des ersten Lochs gerade ausgebildet sein.

Der Polkopfabschnitt schließt sich bevorzugt entlang einer bezüglich der Rotationsachse radialen Mittelline an den Polkernabschnitt an. Dabei können in Umfangsrichtung gegenüberliegende Ränder des Polkernabschnitts parallel zur radialen Mittellinie verlaufen. Ein jeweiliger Rand des Polkernabschnitts begrenzt insbesondere den Aufnahmebereich. Zur Mittellinie parallele Linien, auf denen die gegenüberliegenden Ränder des Polkernabschnitts liegen, können eine seitliche Begrenzung der ersten und zweiten Überhangabschnitte bilden.

Vorteilhafterweise verläuft ein der Mittellinie zugewandter Randabschnitt des ersten Lochs parallel zu der Mittellinie. Alternativ oder zusätzlich kann ein von der Mittellinie abgewandter Randabschnitt des ersten Lochs kreisbogenförmig verlaufen.

Es ist daneben auch möglich, dass das erste Loch polygonförmig, viereckförmig, dreieckförmig, kreisförmig oder oval ausgebildet ist.

Hinsichtlich des zweiten Überhangabschnitts kann vorgesehen, dass dieser frei von einem Loch ist.

Alternativ weist der zweite Überhangabschnitt ein zweites Loch auf. Das zweite Loch kann spiegelsymmetrisch zum ersten Loch ausgebildet sein. Die radiale Mittelline kann dabei die Symmetrieachse bilden. Das zweite Loch kann aber auch anders als das erste Loch geformt sein. Im Übrigen lassen sich alle Ausführungen zum ersten Loch und zum ersten Überhangabschnitt auf das zweite Loch bzw. den zweiten Überhangabschnitt übertragen

Es kann ferner vorgesehen sein, dass ein der Mittellinie gegenüberliegender Rand eines Überhangabschnitts einen Ausschnitt bzw. Absatz zum Fixieren eines Abstandshalters aufweist.

Die der Erfindung zugrunde liegende Aufgabe wird ferner gelöst durch ein Rotorblechpaket für einen Rotor, wobei das Rotorblechpaket mehrere erfindungsgemäß Rotorbleche aufweist, die derart entlang der Rotationsachse aufeinander gestapelt sind, dass die ersten Löcher eines jeweiligen Polkopfabschnitts eine erste Durchgangsöffnung ausbilden. Alternativ oder zusätzlich können die zweiten Löcher eines jeweiligen Polkopfabschnitts eine zweite Durchgangsöffnung ausbilden.

Die Durchgangsöffnung kann sich parallel zur Rotationachse erstrecken. In diesem Fall können die Rotorbleche deckungsgleich aufeinander gestapelt sein.

Es ist auch möglich, dass die Rotorbleche mit einem Versatz in Umfangsrichtung bzw. Winkelversatz um die Rotationsachse aufeinander gestapelt sind. Dadurch kann der Rotor geschrägt ausgebildet sein.

Die Rotorbleche können ferner derart geschichtet angeordnet sein, dass die Zentrallöcher eine Nabe und/oder die Jochabschnitte ein Rotorjoch und/oder die Polabschnitte einen Rotorpol ausbilden. Innerhalb jedes Rotorpols können die Polkernabschnitte einen Polkern und/oder die Polkopfabschnitte einen Polkopf des Rotorblechpakets ausbilden.

Die der Erfindung zugrunde liegende Aufgabe wird ferner gelöst durch einen Rotor für eine elektrische Maschine, aufweisend ein erfindungsgemäßes Rotorblechpaket, eine Rotorwelle, auf der das Rotorblechpaket montiert ist, und eine Rotorwicklung, die um einen von den Polkernabschnitten gebildete Polkern gewunden ist.

Die erste Durchgangsöffnung und/oder die zweite Durchgangsöffnung können einen Bolzen zum axialen Fixieren der Rotorbleche aufnehmen. Das axiale Fixieren kann durch Verspannen der Rotorbleche erfolgen.

Die erste Durchgangsöffnung und/oder die zweite Durchgangsöffnung kann bzw. können einen Kühlkanal, durch welchen ein, insbesondere flüssiges, Kühlmittel förderbar ist, ausbilden.

Die Ausschnitte in den Überhangabschnitten können ferner in jedem Polkopf eine axiale Nut ausbilden. In den einander zugewandten Nuten eines jeweiligen Paars benachbarter Rotorpole kann ein Abstandshalter angeordnet, insbesondere eingespannt, sein, welcher die Rotorwicklung in den Aufnahmebereichen hält.

Zwischen der Rotorwelle und der Nabe kann eine Welle-Nabe-Verbindung, insbesondere ein Presssitz, ausgebildet sein.

Die der Erfindung zugrunde liegende Aufgabe wird ferner gelöst durch eine elektrische Maschine mit einem erfindungsgemäßen Rotor und einem Stator, wobei der Rotor drehbar bezüglich des Stators gelagert ist.

Die elektrische Maschine weist bevorzugt ferner eine Kühleinrichtung auf, die dazu eingerichtet ist, ein bzw. das Kühlmittel durch die erste Durchgangsöffnung und/oder die zweite Durchgangsöffnung zu fördern. Mit anderen Worten können die erste Durchgangsöffnung und/oder die zweite Durchgangsöffnung einen fluidleitenden Abschnitt eines die Kühleinrichtung umfassenden Kühlkreislaufs der elektrischen Maschine ausbilden.

Die der Erfindung zugrunde liegende Aufgabe wird ferner gelöst durch ein Fahrzeug mit einer erfindungsgemäßen elektrischen Maschine, die dazu eingerichtet ist, das Fahrzeug anzutreiben.

Weitere Vorteile und Einzelheiten der vorliegenden Erfindung ergeben sich aus den im folgenden beschriebenen Zeichnungen. Diese sind schematische Darstellungen und zeigen:
- Fig. 1: eine Draufsicht auf ein Ausführungsbeispiel des erfindungsgemäßen Rotorblechs;
- Fig. 2: eine Detailansicht des in Fig. 1 gezeigten Rotorblechs im Bereich eines Polabschnitts;
- Fig. 3: eine Prinzipskizze eines Ausführungsbeispiels eines erfindungsgemäßen Rotorblechpakets in einem Ausführungsbeispiel eines erfindungsgemäßen Rotors;
- Fig. 4: eine geschnittene Darstellung des in Fig. 3 gezeigten Rotors;
- Fig. 5: eine Prinzipskizze eines Ausführungsbeispiels eines erfindungsgemäßen Fahrzeugs mit einem Ausführungsbeispiel einer erfindungsgemäßen elektrischen Maschine; und
- Fig. 6: ein Diagramm des Drehmoments über den elektrischen Winkel beim Betrieb einer erfindungsgemäßen elektrischen Maschine und beim Betrieb von Vergleichsbeispielen einer elektrischen Maschine.

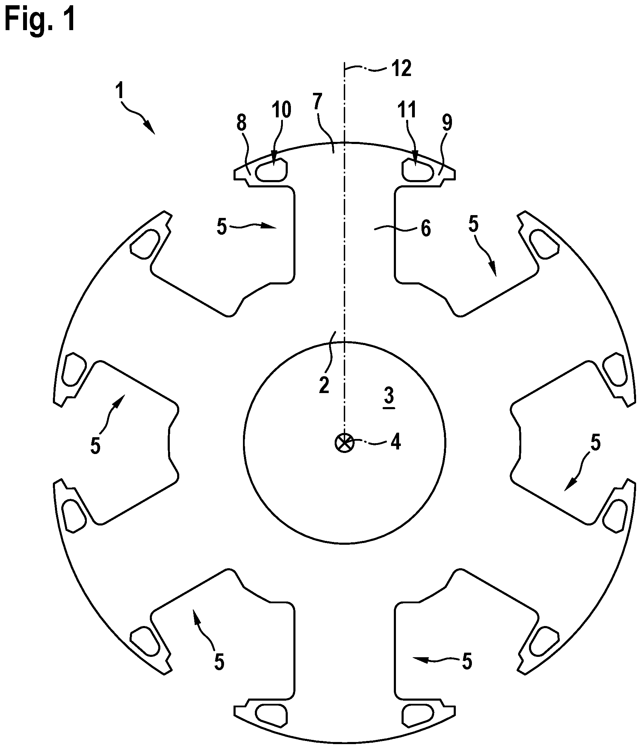

Fig. 1 ist eine Draufsicht auf ein Ausführungsbeispiel eines Rotorblechs 1.

Das Rotorblech 1 weist einen Jochabschnitt 2 mit einem Zentralloch 3, durch das eine Rotationsachse 4 des Rotorblechs 1 verläuft, auf. Das Zentralloch 3 ist im vorliegenden Ausführungsbeispiel kreisrund ausgebildet und vollständig vom Jochabschnitt 2 umgeben. Daneben weist das Rotorblech 1 mehrere Polabschnitte 5 auf. Jeder Polabschnitt 5 weist einen Polkernabschnitt 6, der radial vom Jochabschnitt 2 absteht, und einen Polkopfabschnitt 7, der sich radial außen an den Polkernabschnitt 6 anschließt, auf. Der Polkopfabschnitt 7 bildet einen ersten Überhangabschnitt 8 und einen zweiten Überhangabschnitt 9 aus, die beidseitig in Umfangsrichtung über den Polkernabschnitt 6 herausragen. Im ersten Überhangabschnitt 8 ist ein erstes Loch 10 ausgebildet.

Im vorliegenden Ausführungsbeispiel ist zusätzlich ein zweites Loch 11 im zweiten Überhangabschnitt 9 ausgebildet. Dieses zweite Loch 11 ist spiegelsymmetrisch zum ersten Loch 10 ausgebildet. Insoweit lassen sich alle folgenden Ausführungen zum ersten Loch 10 entsprechend auf das zweite Loch 11 übertragen.

Gezeigt ist ferner eine bezüglich der Rotationsachse 4 radiale Mittelline 12, entlang welcher sich der Polkopfabschnitt 7 an den Polkernabschnitt 6 anschließt. Die Mittellinie 12 bildet auch die Symmetrieachse, bezüglich welcher das erste Loch 10 und das zweite Loch 11 spiegelsymmetrisch sind.

Im Detail ist das Rotorblech 1 aus einem weichmagnetischen Metall ausgebildet. Rein exemplarisch weist das Rotorblech 1 insgesamt sechs Polabschnitte 5 auf, die in Umfangsrichtung äquidistant um den Jochabschnitt 2 herum angeordnet sind.

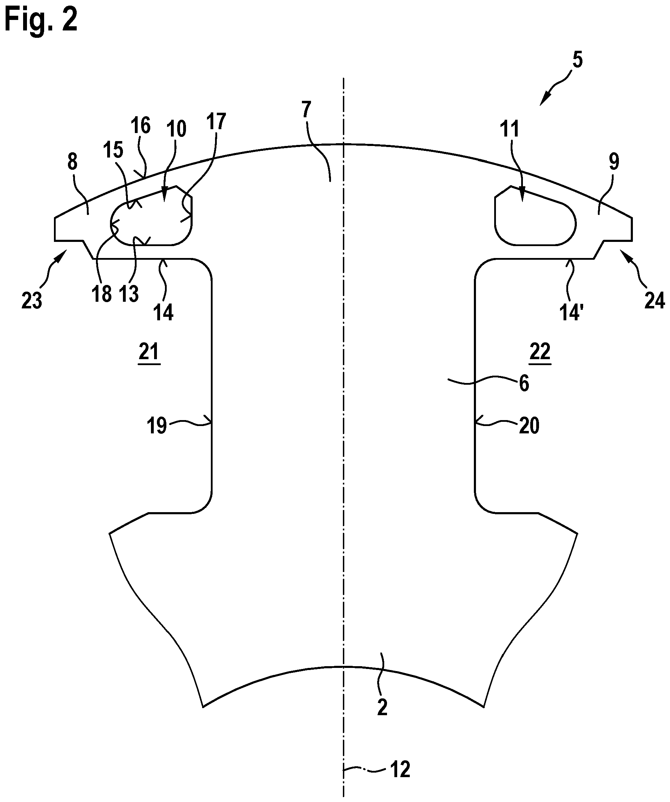

Fig. 2 ist eine Detailansicht des in Fig. 1 gezeigten Rotorblechs 1 im Bereich eines Polabschnitts 5.

Der Verlauf eines jochabschnittnahen Randabschnitts 13 des ersten Lochs 10 folgt dem Verlauf eines jochabschnittnahen Randes 14 des ersten Überhangabschnitts 8. Der Randabschnitt 13 und der Rand 14 sind hier gerade, sodass die die Verläufe parallel zueinander sind. Im Detail verläuft der jochabschnittseitige Rand 13 senkrecht zur radialen Mittelline 12.

Außerdem folgt der Verlauf eines jochabschnittfernen Randabschnitts 15 des ersten Lochs 10 dem Verlauf eines jochabschnittfernen Randes 16 des ersten Überhangabschnitts 8. Der Randabschnitt 15 und der Rand 16 sind hier kreisbogenförmig, sodass die Verläufe konzentrisch zueinander sind.

Ein der Mittellinie 12 zugewandter Randabschnitt 17 des ersten Lochs 10 verläuft parallel zur Mittellinie 12. Ein von der Mittellinie 12 abgewandter Randabschnitt 18 des ersten Lochs 10 verläuft kreisbogenförmig. Übergänge zwischen den Randabschnitten 13, 15, 17, 18 sind abgerundet ausgebildet.

Wie Fig. 2 ferner zu entnehmen ist, verlaufen in Umfangsrichtung gegenüberliegende Ränder 19, 20 des Polkernabschnitts 6 parallel zur radialen Mittellinie 12. Der Rand 19 begrenzt zusammen mit dem jochabschnittnahen Rand 14 des ersten Überhangabschnitts 8 einen ersten Aufnahmebereich 21. Der Rand 20 begrenzt zusammen mit dem jochabschnittnahen Rand 14' des zweiten Überhangabschnitts 9 einen zweiten Aufnahmebereich 22. Außerdem ist bezüglich der Mittelline 12 außen in jedem Überhangabschnitt 8, 9 ein zum jochabschnittfernen Rand 16 weisender Ausschnitt 23, 24 vorgesehen.

Gemäß einem weiteren Ausführungsbeispiel des Rotorblechs 1 ist nur das erste Loch 10 in einem jeweiligen Polabschnitt 5 vorgesehen. Das heißt, dass der zweite Überhangabschnitt 9 frei von einem Loch ist.

Gemäß weiterer Ausführungsbeispiele ist das erste Loch 10 und/oder das zweite Loch 11 kreisförmig oder oval. Alternativ ist das erste Loch 10 und/oder das zweite Loch 12 polygonförmig, insbesondere dreieckförmig oder viereckförmig, ausgebildet. Gemäß einem weiteren Ausführungsbeispiels ist der jochabschnittferne Randabschnitt 15 gerade ausgebildet.

Gemäß weiteren Ausführungsbeispielen sind anstelle von sechs Polabschnitten 5 vier, acht, zehn oder zwölf Polabschnitte 5 vorgesehen.

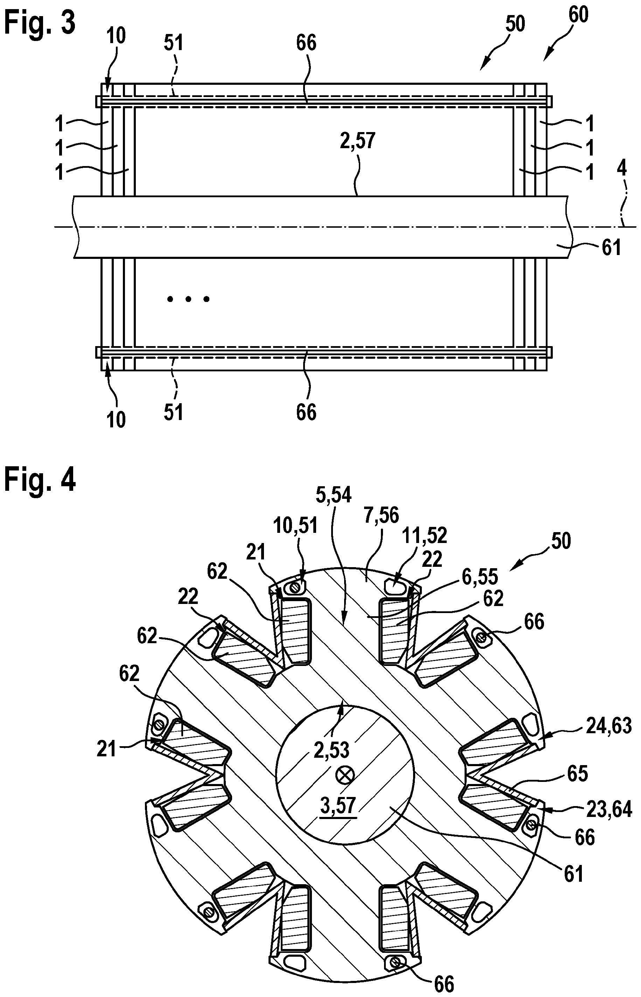

Fig. 3 und Fig. 4 zeigen jeweils ein Ausführungsbeispiel eines Rotorblechpakets 50 in einem Ausführungsbeispiel eines Rotors 60, wobei Fig. 3 eine Prinzipskizze und Fig. 4 eine geschnittene Ansicht ist.

Das Rotorblechpaket 50 weist mehrere Rotorbleche 1 nach einem der zuvor beschriebenen Ausführungsbeispiele auf. Aus Gründen der Übersichtlichkeit sind nur die axial äußeren Rotorblech 1 in Fig. 3 schematisch dargestellt. Die Rotorbleche 1 sind derart entlang der Rotationsachse 4 aufeinander gestapelt, dass die ersten Löcher 10 eines jeweiligen Polkopfabschnitts 7 eine erste Durchgangsöffnung 51 ausbilden. Soweit die zweiten Löcher 11 vorgesehen sind, bilden die zweiten Löcher 11 eine zweite Durchgangsöffnung 52 (siehe Fig. 4) aus. Die Rotorbleche 1 sind im vorliegenden Ausführungsbeispiel deckungsgleich gestapelt und gegeneinander elektrisch isoliert.

Daneben sind die Rotorbleche 1 derart geschichtet angeordnet, dass die Jochabschnitte 2 ein Rotorjoch 53 und die Polabschnitte 5 einen Rotorpol 54 ausbilden. Innerhalb jedes Rotorpols 54 bilden die Polkernabschnitte 6 einen Polkern 55 und die Polkopfabschnitte 5 einen Polkopf 56 des Rotorblechpakets 50 aus. Die Zentrallöcher 2 bilden eine Nabe 57 aus.

Gemäß einem weiteren Ausführungsbeispiel des Rotorblechpakets 50 ist zwischen jeweils zwei axial benachbarten Rotorblechen 1 ein Versatz in Umfangsrichtung bzw. Winkelversatz um die Rotationsachse vorgesehen, sodass ein geschrägtes Rotorblechpaket 50 ausgebildet ist.

Der Rotor 60 weist ein Rotorblechpaket 50 gemäß einem der zuvor beschriebenen Ausführungsbeispiele, eine Rotorwelle 61, auf der das Rotorblechpaket 50 montiert ist, und eine Rotorwicklung 62 auf. Zwischen der Rotorwelle 61 und der Nabe 57 ist eine Welle-Nabe-Verbindung, z.B. in Form eines Presssitzes, ausgebildet. Die Rotorwicklung 62 ist um den Polkern 55 eines jeweiligen Rotorpols 54 gewunden.

Wie am besten in Fig. 4 zu erkennen ist, ist die Rotorwicklung 62 in den ersten und zweiten Aufnahmebereichen 21, 22 angeordnet. Die Ausschnitte 23, 24 eines jeweiligen Polkopfabschnitts 7 bilden entlang des Rotors 60 jeweils eine Nut 63, 64 im Polkopf 56 aus. In die Nuten 63, 64 zweier unmittelbar benachbarter Paare von Polköpfen 56 ist ein Abstandshalter 65 eingesetzt, der gegen das Rotorjoch 53 abgestützt ist und die Rotorwicklungen 62 in den Aufnahmebereichen 21, 22 hält.

Außerdem ist weist der Rotor 60 Bolzen 66 auf, die zum axialen Fixieren der Rotorbleche 1 jeweils in einer der ersten Durchgangsöffnungen 51 angeordnet sind. Selbstverständlich können die Bolzen 66 alternativ oder zusätzlich in den zweiten Durchgangsöffnungen 52 angeordnet sein.

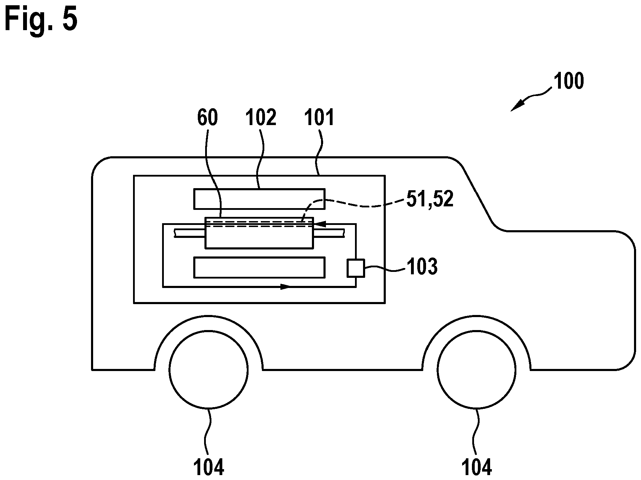

Fig. 5 ist eine Prinzipskizze eines Ausführungsbeispiels eines Fahrzeugs 100 mit einem Ausführungsbeispiel einer elektrischen Maschine 101.

Die elektrische Maschine 101 ist eine fremderregte Synchronmaschine (EESM) und weist einen Stator 102 sowie einen Rotor 60 gemäß einem der zuvor beschriebenen Ausführungsbeispiele auf, welcher drehbar bezüglich des Stators 102 gelagert ist. Optional weist die elektrische Maschine 101 eine Kühleinrichtung 103 auf, die dazu eingerichtet ist ein Kühlmittel durch die erste Durchgangsöffnung 51 und/oder die zweite Durchgangsöffnung 52 zu fördern, welche insoweit einen Kühlkanal für das Kühlmittel ausbilden.

Das Fahrzeug 100 weist ferner Räder 104 auf. Die elektrische Maschine 101 ist dazu eingerichtet ist, wenigstens eines der Räder 104 indirekt, beispielsweise über ein Getriebe (nicht gezeigt) anzutreiben oder direkt, beispielsweise in Gestalt eines Radnabenmotors, anzutreiben. Das Fahrzeug 100 kann ferner eine mit dem Rad 104 gekoppelte Achse (nicht gezeigt) aufweisen, die die elektrische Maschine 101 des Fahrzeugs 100 direkt oder indirekt antreibt.

Das Fahrzeug 100 ist ein batterieelektrisches Fahrzeug (BEV), ein mittels einer Brennstoffzelle betriebenes Fahrzeug oder ein Hybridfahrzeug. Im letzteren Fall weist das Fahrzeug 100 ferner einen Verbrennungsmotor (nicht gezeigt) auf.

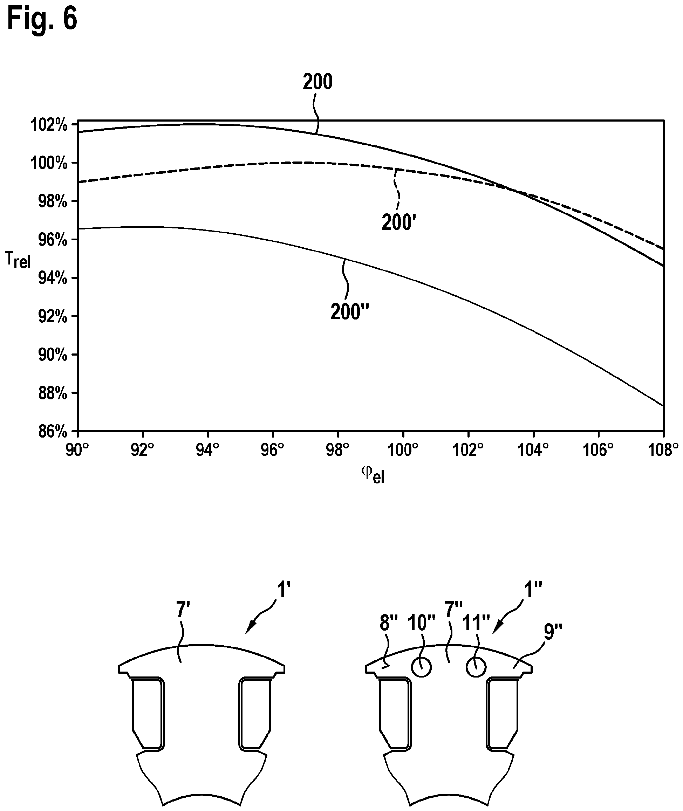

Fig. 6 ist ein Diagramm eines relativen Drehmoments Tᵣₑₗ über den elektrischen Winkel φₑₗ beim Betrieb einer elektrischen Maschine 101 gemäß dem in Fig. 1 gezeigten Ausführungsbeispiel und beim Betrieb von Vergleichsbeispielen einer elektrischen Maschine. Daneben zeigt Fig. 6 die vom Ausführungsbeispiel abweichenden Gestaltungen der Rotorbleche 1', 1" bei den Vergleichsbeispielen.

Beim ersten Vergleichsbeispiel weist das Rotorblech 1 ` keine Löcher im Polkopfabschnitt 7' auf. Beim zweiten Vergleichsbeispiel weist das Rotorblech 1" zwar zwei Löcher 10", 11" im Polkopfabschnitt 7" auf. Diese Löcher befinden sich jedoch nicht in den Überhangabschnitten 8", 9", sondern dazwischen.

Wie dem Diagramm in Fig. 6 entnommen werden kann, weist der Verlauf 200' des Drehmoments beim ersten Vergleichsbeispiel, bei dem keine Löcher vorgesehen sind, einen relativen Spitzenwert von 100,0 % auf. Beim zweiten Vergleichsbeispiel, bei dem die Löcher 10", 11" nicht in den Überhangabschnitten 8", 9" vorgesehen sind, weist der Verlauf 200" einen relativen Spitzenwert des Drehmoments von 96,8 % auf. Der relative Spitzenwert des Verlaufs 200 der elektrischen Maschine 101 gemäß dem Ausführungsbeispiel weist mit 102,0 % den höchsten Wert auf.

## Patentansprüche

1. Rotorblech (1) für ein Rotorblechpaket (50), wobei das Rotorblech (1) aufweist:
- einen Jochabschnitt (2) mit einem Zentralloch (3), durch das eine Rotationsachse (4) des Rotorblechs (1) verläuft, und
- mehrere Polabschnitte (5), die jeweils einen Polkernabschnitt (6), der radial vom Jochabschnitt (2) absteht, und einen Polkopfabschnitt (7), der sich radial außen an den Polkernabschnitt (6) anschließt und einen ersten Überhangabschnitt (8) und einen zweiten Überhangabschnitt (9) ausbildet, die beidseitig in Umfangsrichtung über den Polkernabschnitt (6) herausragen, aufweisen,
**dadurch gekennzeichnet, dass**
im ersten Überhangabschnitt (8) ein erstes Loch (10) ausgebildet ist.

2. Rotorblech nach Anspruch 1, wobei der Verlauf eines jochabschnittnahen Randabschnitts (13) des ersten Lochs (10) dem Verlauf eines jochabschnittnahen Randes (14) des ersten Überhangabschnitts (8) folgt, insbesondere parallel zum Verlauf des jochabschnittnahen Randes (14) ist.

3. Rotorblech nach Anspruch 1 oder 2, wobei der Verlauf eines jochabschnittfernen Randabschnitts (15) des ersten Lochs (10) dem Verlauf eines jochabschnittfernen Randes (16) des ersten Überhangabschnitts (8) folgt, insbesondere konzentrisch zum Verlauf des jochabschnittfernen Randes (16) ist.

4. Rotorblech nach Anspruch 1 oder 2, wobei ein jochabschnittferner Randabschnitt (15) des ersten Lochs (10) gerade ausgebildet ist.

5. Rotorblech nach einem der vorhergehenden Ansprüche, wobei sich der Polkopfabschnitt (7) entlang einer bezüglich der Rotationsachse (4) radialen Mittelline (12) an den Polkernabschnitt (6) anschließt.

6. Rotorblech nach Anspruch 5, wobei ein der Mittellinie (12) zugewandter Randabschnitt (17) des ersten Lochs (10) parallel zu der Mittellinie (12) verläuft.

7. Rotorblech nach Anspruch 5 oder 6, wobei ein von der Mittellinie (12) abgewandter Randabschnitt (18) des ersten Lochs (10) kreisbogenförmig verläuft.

8. Rotorblech nach einem der vorhergehenden Ansprüche, wobei das erste Loch (10) polygonförmig, viereckförmig, dreieckförmig, kreisförmig oder oval ausgebildet ist.

9. Rotorblech nach einem der vorhergehenden Ansprüche, wobei der zweite Überhangabschnitt (9) frei von einem Loch ist oder ein zweites Loch (11) aufweist, das spiegelsymmetrisch zum ersten Loch (10) ausgebildet ist.

10. Rotorblechpaket (50) für einen Rotor (60), wobei das Rotorblechpaket (50) mehrere Rotorbleche (1) nach einem der vorhergehenden Ansprüche aufweist, die derart entlang der Rotationsachse (4) aufeinander gestapelt sind, dass die ersten Löcher (10) eines jeweiligen Polkopfabschnitts (7) eine erste Durchgangsöffnung (51) ausbilden.

11. Rotor (60) für eine elektrische Maschine (101), aufweisend
- ein Rotorblechpaket (50) nach Anspruch 10,
- eine Rotorwelle (61), auf der das Rotorblechpaket (50) montiert ist, und
- eine Rotorwicklung (62), die um einen von den Polkernabschnitten (6) gebildete Polkern (55) gewunden ist.

12. Rotor nach Anspruch 11, wobei die erste Durchgangsöffnung (51) einen Bolzen (66) zum axialen Fixieren der Rotorbleche (1) aufnimmt.

13. Elektrische Maschine (101) mit einem Rotor (60) nach Anspruch 11 oder 12 und einem Stator (102), wobei der Rotor (60) drehbar bezüglich des Stators (102) gelagert ist.

14. Elektrische Maschine nach Anspruch 13, ferner aufweisend eine Kühleinrichtung (103), die dazu eingerichtet ist, ein Kühlmittel durch die erste Durchgangsöffnung (51) zu fördern.

15. Fahrzeug (100) mit einer elektrischen Maschine (101) nach Anspruch 14, die dazu eingerichtet ist, das Fahrzeug (100) anzutreiben.
